# EUROPEAN PATENT APPLICATION

(11) **EP 2 078 934 A1**
(43) Date of publication of application: **15.07.2009**
(21) Application number: 07792911.5
(22) Date of filing: 23.08.2007
(51) Int. Cl.: G01D 5/245, G01P 3/487

(54) **MAGNETIC ENCODER**

(30) Priority: 30.11.2006 JP 2006323332; 27.12.2006 JP 2006350775
(71) Applicant: NOK Corporation, Minato-ku Tokyo 105-8585 (JP)
(72) Inventor: MUNEKATA, Shinobu, Fukushima-shi Fukushima 960-1102 (JP); KOBAYASHI, Naoto, Fukushima-shi Fukushima 960-1102 (JP); YARIMIZU, Kenichi, Fukushima-shi Fukushima 960-1102 (JP)
(74) Representative: TBK-Patent
(86) International application number: PCT/JP2007/066333
(87) International publication number: WO 2008/065789

(57) **Abstract**

A magnetic encoder formed annularly of a magnetic rubber material, provided with multiple poles magnetized in the circumferential direction and having a surface to be detected being read out by means of a magnetic sensor in which the surface to be detected can be prevented from being damaged significantly and a damage is inconspicuous even if damaged so that the product value is prevented from being deteriorated. The area on the surface to be detected (2) susceptible to damage is reduced and a three-dimensional shape (3) is provided previously in the surface to be detected (2) in order to make a damage inconspicuous when the surface to be detected (2) is damaged. An annular level difference provided with a lower surface portion between the higher surface portions on the outer circumferential side and the inner circumferential side, protrusions or notches provided radially, protrusions or notches provided concentrically, protrusions or notches provided in a lattice form, or protrusions or notches provided in a logo pattern are suitably employed as the three-dimensional shape (3).

## Description

### BACKGROUND OF THE INVENTION

### Field of the Invention

The present invention relates to a magnetic encoder used for detecting a rotating speed, an angle of rotation and the like in various rotating devices.

### Description of the Conventional Art

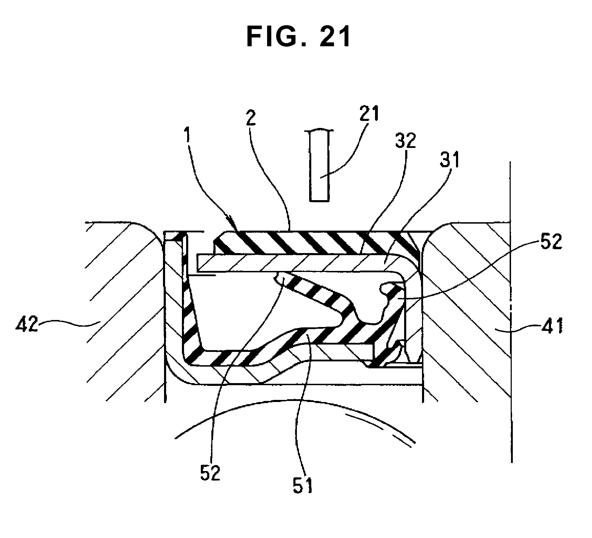

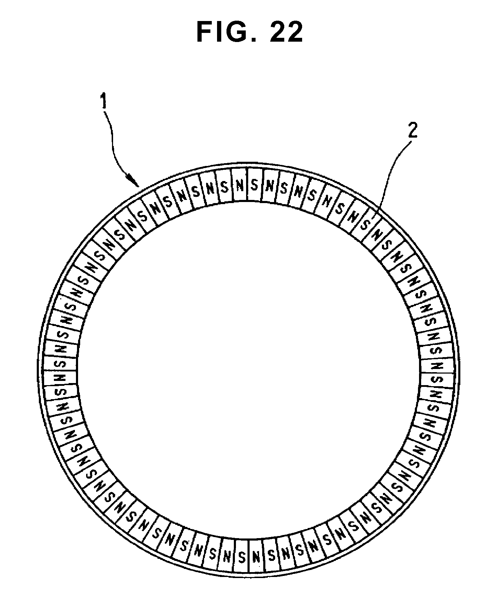

Conventionally, there has been known a magnetic encoder 1 which is formed in an annular shape by a magnetic rubber material as shown in Fig. 21, is magnetized to be multipolar in a circumferential direction as shown in Fig. 22, and has a detected surface 2 read by a magnetic sensor 21 (Fig. 21).

The magnetic encoder 1 in Fig. 21 is attached to a flange surface 32 of a holder 31 constituted by a metal ring, and the holder 31 is fitly attached, for example, to an outer periphery of an inner ring 41 of a bearing, whereby the magnetic encoder 1 rotates together with the inner ring 41. On the other hand, the magnetic sensor 21 remains at one position without rotating. Accordingly, a magnetic pole pitch (a pulse signal) of the detected surface 2 is read on the basis of the rotation of the magnetic encoder 1 at the front of the magnetic sensor 21, so that a measurement is carried out. Further, there is a case that a lip seal 51 fitly attached to an outer ring 42 side of a bearing is combined at a back surface side of the holder 31. In this case, a lip end 52 of the lip seal 51 is slidably in close contact with the holder 31, thereby sealing external dust or the like.

However, since the detected surface 2 of the magnetic encoder 1 has been conventionally formed as a flat surface which is extremely neat (smooth) over the whole surface thereof, a great scratch tends to be formed on the surface if a foreign matter comes into contact with the surface. Further, even if only slightly being scratched, the scratch is conspicuous, thereby causing reduction of a product value.
Patent Document 1: Japanese Unexamined Patent Publication No. 2004-278619
Patent Document 2: Japanese Unexamined Patent Publication No. 2003-28309
Patent Document 3: Japanese Unexamined Patent Publication No. 2001-141069

### SUMMARY OF THE INVENTION

### Problem to be Solved by the Invention

The present invention is made by taking the points mentioned above into consideration, and an object of the present invention is to provide a magnetic encoder in which formation of a great scratch on a detected surface of the magnetic encoder can be inhibited, and a scratch is rather inconspicuous even if the detected surface is scratched, whereby reduction in a product value can be inhibited.

### Means for Solving the Problem

In order to achieve the object mentioned above, in accordance with claim 1 of the present invention, there is provided a magnetic encoder which is formed in an annular shape by a magnetic rubber material, is magnetized to be multipolar in a circumferential direction and has a detected surface read by a magnetic sensor, wherein the detected surface is provided with a three-dimensional shape for reducing an area which tends to be scratched on the detected surface and making a the scratch inconspicuous if the detected surface is scratched.

Further, in accordance with claim 2 of the present invention, there is provided a magnetic encoder as recited in claim 1, wherein the three-dimensional shape is constituted by annular steps provided with a low surface portion between high surface portions at an outer peripheral side and an inner peripheral side.

Further, in accordance with claim 3 of the present invention, there is provided a magnetic encoder as recited in claim 1, wherein the three-dimensional shape is constituted by radially provided projections or notches.

Further, in accordance with claim 4 of the present invention, there is provided a magnetic encoder as recited in claim 1, wherein the three-dimensional shape is constituted by concentrically provided circular projections or notches.

Further, in accordance with claim 5 of the present invention, there is provided a magnetic encoder as recited in claim 1, wherein the three-dimensional shape is constituted by projections or notches provided in a grid shape.

Further, in accordance with claim 6 of the present invention, there is provided a magnetic encoder as recited in claim 1, wherein the three-dimensional shape is constituted by projections or notches provided as a logo pattern.

Further, in accordance with claim 7 of the present invention, there is provided a magnetic encoder as recited in claim 1, wherein the magnetic encoder is attached to a holder for retaining the magnetic encoder, one product is formed by the magnetic encoder and the holder, the magnetic encoder of one product has such a structure that a part of the detected surface comes into contact with the holder of the adjacent product at a time of piling a plurality of the products in an axial direction, the three-dimensional shape as recited in claim 1 is provided at a portion coming into contact with the holder of the adjacent product and other portions in the detected surface, and the three-dimensional shape provided at the portion coming into contact with the holder of the adjacent product is provided more thickly per unit area than the three-dimensional shape provided at the other portions.

Further, in accordance with claim 8 of the present invention, there is provided a magnetic encoder as recited in claim 1, wherein the magnetic encoder is attached to a holder for retaining the magnetic encoder, one product is formed by the magnetic encoder and the holder, the magnetic encoder of one product has such a structure that a part of the detected surface comes into contact with the holder of the adjacent product at a time of piling a plurality of the products in an axial direction, and the three-dimensional shape as recited in claim 1 is provided only at a portion coming into contact with the holder of the adjacent product and near the portion in the detected surface.

Further, in accordance with claim 9 of the present invention, there is provided a magnetic encoder as recited in claim 1, wherein the magnetic encoder is attached to a holder for retaining the magnetic encoder, and is combined with a lip seal being slidably in close contact with the holder, one product is formed by the magnetic encoder, the holder and the lip seal, the magnetic encoder of one product has such a structure that a part of the detected surface comes into contact with the lip seal of the adjacent product at a time of piling a plurality of the products in an axial direction, the three-dimensional shape as recited in claim 1 is provided at a portion coming into contact with the lip seal of the adjacent product and other portions, in the detected surface, and the three-dimensional shape provided at the portion coming into contact with the lip seal of the adjacent product is provided more thickly per unit area than the three-dimensional shape provided at the other portions.

Further, in accordance with claim 10 of the present invention, there is provided a magnetic encoder as recited in claim 1, wherein the magnetic encoder is attached to a holder for retaining the magnetic encoder, and is combined with a lip seal being slidably in close contact with the holder, one product is formed by the magnetic encoder, the holder and the lip seal, the magnetic encoder of one product has such a structure that a part of the detected surface comes into contact with the lip seal of the adjacent product at a time of piling a plurality of the products in an axial direction, and the three-dimensional shape as recited in claim 1 is provided only at a portion coming into contact with the lip seal of the adjacent product and near the portion in the detected surface.

Further, in accordance with claim 11 of the present invention, there is provided a magnetic encoder as recited in claim 7 or 9, wherein the three-dimensional shape provided on the detected surface is constituted by concentric circle shaped projections, and radial intervals between the projections are more thickly set for the projections provided at a portion coming into contact with the holder or the lip seal of the adjacent product than for the projections provided at the other portions.

In the magnetic encoder in accordance with claim 1 of the present invention provided with the structure mentioned above, since the detected surface is provided with the three-dimensional shape on the detected surface for reducing the area which tends to be scratched and for making a scratch inconspicuous even if the detected surface is scratched, when a foreign matter comes into contact with the detected surface, the foreign matter is brought into limitative contact only with the relatively convex portion of the three-dimensional shape, and is not brought into contact with the relatively concave portion. Accordingly, it is possible to limit the portion which may be scratched. Further, if a scratch is formed by accident, the scratch is also a kind of three-dimensional shape, so that the three-dimensional shape and the scratch exist together on the detected surface. Accordingly, it is possible to make the scratch inconspicuous in comparison with the conventional one in which only a scratch appears on a smooth surface.

As a concrete configuration of the three-dimensional shape, on the basis of both of a functional request for reducing the area tending to be scratched on the detected surface and making any scratch inconspicuous in the case that the detected surface is scratched, and a molding process-wise request for easily forming the three-dimensional shape, it is preferable to employ the annular steps provided with the low surface portion (the portion which is made one step lower by the step) between the high surface portions (the portions which are made one step higher by the step) at the outer peripheral side and the inner peripheral side (claim 2), the radial projections or notches (claim 3), the concentric circle shaped projections or notches (claim4), the grid-shapedprojections or notches (claim 5), the projections or the notches provided as the logo pattern (claim 6), and the like. The projection means a portion protruding from its surrounding (a convex portion), and the notch means a portion which is recessed from its surrounding (a concave portion). Further, a so-called knurling worked by pressing a jig to the detected surface is included in the grid-shaped notches (claim 5) as one kind of them.

Further, in the magnetic encoder in accordance with claim 7 of the present invention, the magnetic encoder is attached to the holder (one kind of the metal ring) for retaining the magnetic encoder, and one product is formed by the magnetic encoder and the holder. Further, the magnetic encoder of one product has such the structure that a part of the detected surface comes into contact with the holder of the adjacent product in the case of piling a plurality of the products in the axial direction. In this case, since the detected surface is most easily scratched at the portion coming into contact with the holder of the adjacent product, it is possible to locally and efficiently suppress scratch and to make any scratch inconspicuous by arranging the three-dimensional shape around this portion more thickly than the three-dimensional shape at the other portions. In this case, the three-dimensional shape may be provided on the whole of the detected surface (the thick portion and the thin portion of the three-dimensional shape are provided on the whole of the detected surface), however, may be provided only at the portion coming into contact with the holder of the adjacent product and near the portion in the detected surface, as described in claim 8.

Further, in the magnetic encoder in accordance with claim 9 of the present invention, the magnetic encoder is attached to the holder (one kind of the metal ring) for retaining the magnetic encoder, and is combined with the lip seal being slidably in close contact with the holder, and one product is formed by the magnetic encoder, the holder and the lip seal. Further, the magnetic encoder of one product has such the structure that a part of the detected surface comes into contact with the lip seal of the adjacent product in the case of piling a plurality of the products in the axial direction. In this case, since the detected surface is most easily scratched at the portion coming into contact with the lip seal of the adjacent product, it is possible to locally and efficiently suppress scratch and to make any scratch inconspicuous by arranging the three-dimensional shape around this portion more thickly than the three-dimensional shape at the other portions. In this case, the three-dimensional shape may be provided on the whole of the detected surface (the thick portion and the thin portion of the three-dimensional shape are provided on the whole of the detected surface), however, may be provided only at the portion coming into contact with the lip seal of the adjacent product and near the portion in the detected surface, as described in claim 10.

Further, in the magnetic encoder in accordance with claim 7 or 9, it is preferable that the three-dimensional shape provided on the detected surface is constituted by the concentric circle shaped projections, and in this case, a degree of thick/thin level of the three-dimensional shape is set on the basis of a magnitude of the radial interval between the projections. Since the height of the projections does not change at any position on the circumference, and thus the distance to the sensor is constant, it can be said that the concentric circle shaped projections, that is, the annular projections gives a most excellent characteristic of the encoder without affecting a magnetic field, in comparison with the radial or grid-shaped projections.

### Effect of the Invention

The present invention achieves the following effects.

In the magnetic encoder in accordance with claims 1 to 6 of the present invention, since the detected surface is provided with the three-dimensional shape constituted by the steps, the projections, the notches or the like for reducing the area tending to be scratched on the detected surface and making a scratch inconspicuous at a time when the detected surface is scratched, as mentioned above, a foreign matter is limitedly brought into contact only with the relatively convex portion of the three-dimensional shape even if the foreign matter comes into contact with the detected surface, and is not brought into contact with the relatively concave portion, so that it is possible to limit the portion which may be scratched. Further, even if a scratch is formed, the scratch is also one kind of three-dimensional shape. Accordingly, since the three-dimensional shape and the scratch exist together on the detected surface, it is possible to make the scratch inconspicuous in comparison with the conventional one in which only a scratch appears on a smooth surface. Therefore, it is possible to provide the magnetic encoder in which formation of a great scratch on the detected surface of the magnetic encoder can be inhibited in accordance with a desired purpose of the present invention, and a scratch can be made to be rather inconspicuous even if the detected surface is scratched, whereby reduction in a product value can be inhibited.

Further, while the detected surface of the magnetic encoder is scratched by a foreign matter coming into contact with the detected surface, in the case that the steps are provided as the three-dimensional shape on the detected surface (claim 2), the foreign matter comes into contact with the high surface portions of the steps so as to hardly come into contact with the low surface portion of the steps, so that the low surface portion of the steps is hardly scratched. Further, in the case that the projections are provided as the three-dimensional shape on the detected surface (claims 3 to 6), a foreign material comes into contact with the projections so as to hardly come into contact with the other portions than the projections. Accordingly, the other portions than the projections are hardly scratched. Further, in the case that the notches (claims 3 to 6) are provided as the three-dimensional shape on the detected surface, a foreign matter comes into contact with the other portions than the notches and hardly comes into contact with portions within the notches. Accordingly, the portions within the notches are hardly scratched. Therefore, since the portions which is hardly scratched by a foreign matter is set on a part of the detected surface, it is possible to provide the magnetic encoder having such the structure that a detected portion is hardly scratched, by setting so as to utilize the portion which is hardly scratched as the detected portion.

Further, in the case of handling in a lump a plurality of combined products, each of which is constituted by the combination of the magnetic encoder, the holder to which the magnetic encoder is attached, and the lip seal being in close contact with the holder, there may occur a situation that the magnetic encoder of one combined product is attracted to the lip seal of the adjacent combined product on the basis of its magnetic force and can be hardly detached, when they are piled in the axial direction at a time of product delivery for example. However, if the three-dimensional shape such as the steps, the projections, the notches or the like is provided on the surface of the magnetic encoder like as the present invention, the contact area of the magnetic encoder with the lip seal is reduced and attraction force is weakened. Accordingly, it is easy to detach the magnetic encoder from the lip seal against the magnetic force. Therefore, there is an advantage that it becomes easy to handle the product provided with the magnetic encoder. Further, owing to the structure mentioned above, there is also an advantage that the magnetic encoder of one combined product is hardly scratched by the lip seal of the adjacent combined product at a time of piling them in the axial direction.

Further, in the magnetic encoder in accordance with claim 7 of the present invention, the magnetic encoder is attached to the holder for retaining the magnetic encoder, and one product is formed by the magnetic encoder and the holder. Further, the magnetic encoder of one product has such the structure that a part of the detected surface comes into contact with the holder of the adjacent product in the case of piling a plurality of the products in the axial direction. In this case, since the detected surface is most easily scratched at the portion coming into contact with the holder of the adjacent product, it is possible to locally and efficiently suppress scratch and to make any scratch inconspicuous, by arranging the three-dimensional shape around this portion more thickly than the three-dimensional shape in the other portions. Further, the same effect can be obtained even by providing the three-dimensional shape only at the portion coming into contact with the holder of the adjacent product and near the portion in the detected surface like as claim 8.

Further, in the magnetic encoder in accordance with claim 9 of the present invention, the magnetic encoder is attached to the holder for retaining the magnetic encoder, and is combined with the lip seal slidably being in close contact with the holder, and one product is formed by the magnetic encoder, the holder and the lip seal. Further, the magnetic encoder in one product has such the structure that a part of the detected surface comes into contact with the lip seal of the adjacent product in the case of piling a plurality of the products in the axial direction. In this case, since the detected surface is most easily scratched at the portion coming into contact with the lip seal of the adjacent product, it is possible to locally and efficiently suppress scratch and to make any scratch inconspicuous, by arranging the three-dimensional shape around this portion more thickly than the three-dimensional shape in the other portions. Further, the same effect can be obtained even by providing the three-dimensional shape only at the portion coming into contact with the lip seal of the adjacent product and near the portion in the detected surface like as claim 10.

Further, in the magnetic encoder in accordance with claim 11 of the present invention, since the three-dimensional shape is constituted by the concentric circle shaped projections, the height of the projections does not change at any position on the circumference. Accordingly, since the distance to the sensor is constant, a most excellent characteristic of the encoder can be obtained without affecting the magnetic field. In addition, since this effect can be obtained as far as the three-dimensional shape is constituted by the annular structure, the same effect can be obtained even in the invention in accordance with claim 2 or 4.

### BRIEF EXPLANATION OF DRAWINGS

Fig. 1 is a sectional view of a substantial part of a magnetic encoder in accordance with a first embodiment of the present invention;
Fig. 2 is a sectional view of a substantial part of a magnetic encoder in accordance with a second embodiment of the present invention;
Figs. 3A and 3B are explanatory views showing shape examples of radial projections;
Fig. 4 is a sectional view of a substantial part of a magnetic encoder in accordance with a third embodiment of the present invention;
Figs. 5A and 5B are explanatory views showing shape examples of concentric circle shaped projections;
Fig. 6 is a sectional view of a substantial part of a magnetic encoder in accordance with a fourth embodiment of the present invention;
Fig. 7 is an explanatory view of a knurling process;
Fig. 8 is a sectional view of a substantial part of a magnetic encoder in accordance with a fifth embodiment of the present invention;
Fig. 9 is a sectional view of a substantial part of a magnetic encoder in accordance with a sixth embodiment of the present invention (a sectional view of a substantial part showing another example of a holder);
Fig. 10 is a sectional view of a substantial part of a magnetic encoder in accordance with a seventh embodiment of the present invention (a sectional view of a substantial part showing a state of products being piled) ;
Fig. 11 is a sectional view of a substantial part of the magnetic encoder in accordance with the seventh embodiment of the present invention;
Fig. 12 is a sectional view of a substantial part of the same magnetic encoder showing a state of products being piled;
Fig. 13 is an enlarged view of a substantial part of Fig. 12;
Fig. 14 is a front view of the same magnetic encoder;
Fig. 15 is a plan view of the same magnetic encoder;
Fig. 16 is a sectional view along a line X-X in Fig. 15;
Fig. 17 is an enlarged end view of a portion Y in Fig. 16;
Fig. 18 is a sectional view of a substantial part of a magnetic encoder in accordance with an eighth embodiment of the present invention;
Fig. 19 is a sectional view of a substantial part of a magnetic encoder in accordance with a ninth embodiment of the present invention;
Fig. 20 is a sectional view of a substantial part of a magnetic encoder in accordance with a tenth embodiment of the present invention;
Fig. 21 is a sectional view of a substantial part showing an assembled and installed state of a magnetic encoder in accordance with a conventional art; and
Fig. 22 is an explanatory view of a detected surface as seen in an axial direction.

### Description of Reference Numerals

- 1: magnetic encoder
- 2: detected surface
- 3: three-dimensional shape
- 4, 5: high surface portion
- 6: low surface portion
- 7: step
- 8, 9,: 10, 13 projection
- 11: notch
- 12: quadrangular pyramid shape
- 14: flat surface
- 21: magnetic sensor
- 31: holder
- 32: flange surface
- 33: cylinder portion
- 34: flange portion
- 35: taper portion
- 41: inner ring of bearing
- 42: outer ring of bearing
- 51: lip seal
- 52: lip end
- 53: metal ring
- A: contact position
- B: non-contact position (other position)

### DETAILED DESCRIPTION OF PREFERRED EMBODIMENT

Next, a description will be given of embodiments in accordance with the present invention with reference to the accompanying drawings.

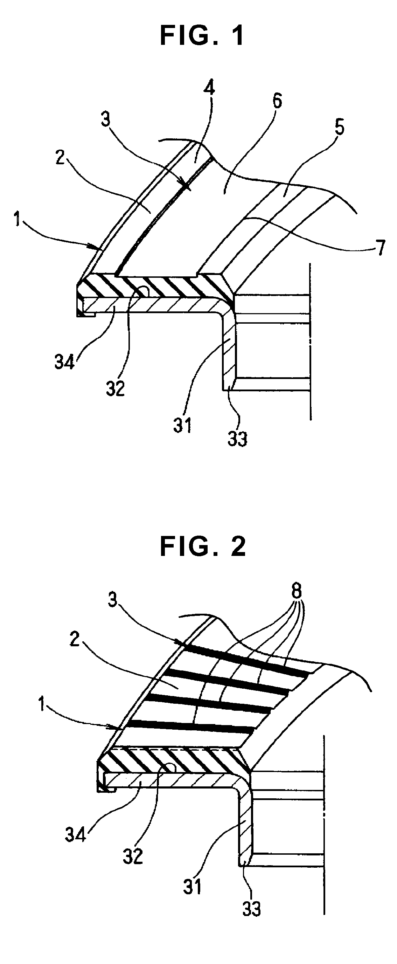

Figs. 1 to 20 show magnetic encoders 1 in accordance with the embodiments of the present invention respectively.

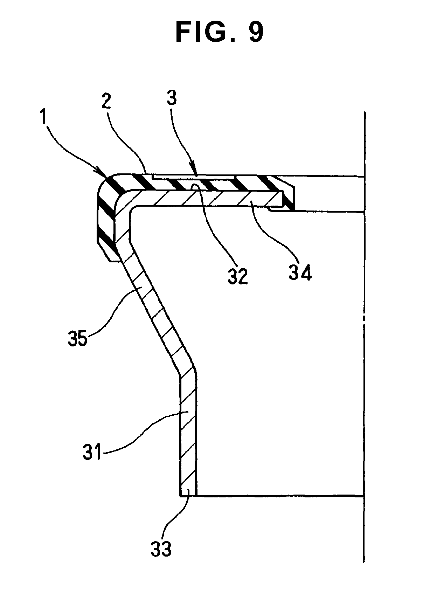

The magnetic encoder 1 in accordance with each of the embodiments is molded in an annular disc shape by a magnetic rubber material obtained by mixing magnetic powder in a rubber material, is magnetized to be multipolar in a circumferential direction so that N poles and S poles of magnets alternately line up on a circumference (refer to Fig. 22), has an annular flat detected surface 2 read by a magnetic sensor 21 (refer to Fig. 21) on one end surface in an axial direction, and is attached (bonded via vulcanization) to a flange surface 32 of a holder 31 constituted by a metal ring so as to be retained by the holder 31. As the holder 31, there is shown a structure in which a flange portion 34 is integrally formed on one end in an axial direction of a cylinder portion 33 toward an outer side in a radial direction, however, the structure is not limited to this, but maybe constituted, for example, by a structure shown in Fig. 9. The holder 31 in Fig. 9 is structured such that a taper portion (a conical portion) 35 having a diameter increasing little by little is integrally formed on one end in an axial direction of the cylinder portion 33, and a flange portion 34 is integrally formed on an end (one end in an axial direction) of the taper portion 35 toward an inner side in a radial direction.

Further, in any case, since the detected surface 2 of the magnetic encoder 1 is conventionally constituted by the smooth surface, which tends to be greatly scratched and also tends to be conspicuous if scratched, the detected surface 2 is provided previously with a three-dimensional shape 3 for reducing an area which tends to be scratched on the detected surface 2 and for making a scratch on the detected surface 2 inconspicuous if it is scratched. In the embodiment in Fig. 1, the three-dimensional shape 3 is set as annular steps 7 provided with an annular low surface portion (a portion which is made one step lower by the step) 6 between a high surface portion (a portion which is made one step higher by the step) 4 at an outer peripheral side having an annular shape and a high surface portion 5 at an inner peripheral side having an annular shape similarly. Each of the high surface portions 4 and 5 and the low surface portion 6 has a predetermined radial width and is formed as an axially perpendicular flat surface, however, may be structured such as to be provided further with steps, projections, notches or the like on the flat surface (for example, provided with concentric circle shaped or radial shaped projections in the low surface portion 6, or the like).

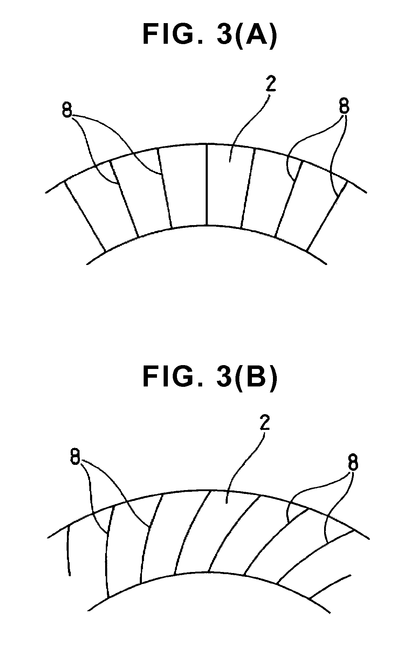

In the embodiment in Fig. 2, the three-dimensional shape 3 is set as a plurality of (a lot of) radially provided projections (radially long protrusions) 8. The other portions than the projections 8 in the detected surface 2 are formed as an axially perpendicular flat surfaces. The projections 8 may be replaced by notches (radially long grooves), and the projections 8 and the notches may be spread alternately on the circumference. A sectional shape of the projection 8 or the notch is formed in a triangular shape (a V shape), however, the shape is not limited particularly. Further, the projections 8 are arranged at even intervals (uniformly) in the figure, however, the intervals are not limited particularly, and the projections 8 or the notches may be arranged at uneven intervals (non-uniformly). Further, the projections 8 or the notches may be inclined at a certain degree with respect to a radial direction, in addition to those extending straightly in the radial direction as shown in Fig. 3A, and may be formed in a spiral shape for example as shown in Fig. 3B.

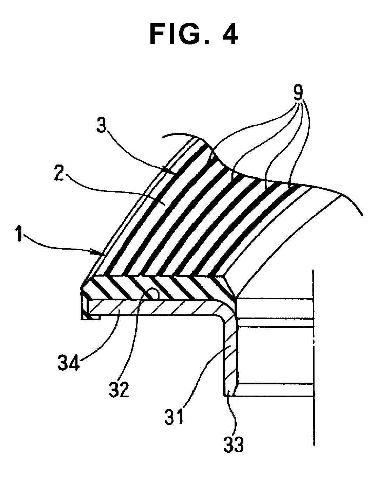

In an embodiment in Fig. 4, the three-dimensional shape 3 is set as a plurality of (seven in the figure) projections (annular protrusions) 9 provided concentrically. The other portions than the projections 9 in the detected surface 2 are formed as an axially perpendicular flat surface. The projections 9 may be replaced by notches (annular grooves), and the projections 9 and the notches may be alternately spread in a radial direction. The sectional shape of the projection 9 or the notch is formed in a triangular shape (a V shape), however, the shape may not be limited particularly. Further, in the figure, the projections 9 are arranged at even intervals, however, the intervals are not limited particularly, and the projections 9 or the notches may be arranged at uneven intervals.

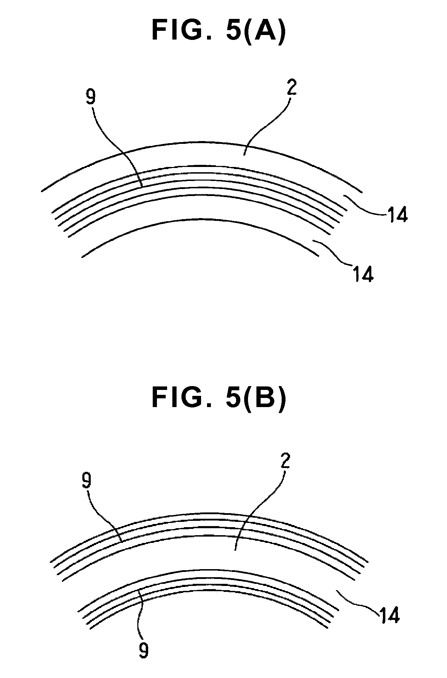

Further, in the example in Fig. 4, the concentric circle shaped projections (a plurality of annular projections) 9 are arranged uniformly or approximately uniformly all over the detected surface 2 from an inner peripheral edge thereof to an outer peripheral edge, however, the group of projections 9 may be arranged intensively at a center portion in the radial direction, an inner peripheral portion and/or an outer peripheral portion of the detected surface 2. In these cases, a wide annular flat surface is set together at a portion where the group of projections 9 are not arranged. For example, in an example in Fig. 5A, a group of projections 9 (five projections 9 in the figure) are arranged intensively at the center portion in the radial direction of the detected surface 2, and wide annular flat surfaces 14 are set together at each of the inner peripheral portion and the outer peripheral portion thereof. Further, in an example in Fig. 5B, groups of projections 9 (Each includes three projections 9 in the figure) are arranged intensively at the inner peripheral portion and the outer peripheral portion of the detected surface 2, and a wide annular flat surface 14 is set together between them (at a center portion in the radial direction). Since the wide annular flat surface 14 is protected from a foreign matter by the group of projections 9, the wide annular flat surface 14 is hardly scratched.

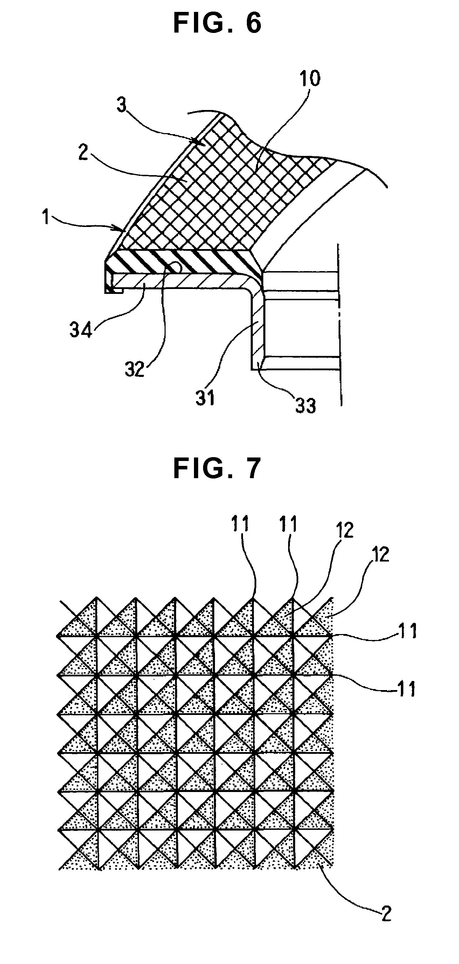

In an embodiment in Fig. 6, the three-dimensional shape 3 is set as projections provided in a grid shape (reticulatedprotrusions) 10. The other portions than the projections 10 in the detected surface 2 are formed as an axially perpendicular flat surface. The projections 10 may be replaced by notches (reticulated grooves). A sectional shape of the projection 10 or the notch is formed in a small triangle shape (V shape), however, the shape is not limited particularly.

Further, in the case of employing the grid-shaped notches, the notches may be formed by a knurling work which is done by pressing a jig (not shown) to the detected surface 2. In this case, a lot of linear notches 11 having a triangular (V-shaped) sectional shape are formed on the worked surface 2 so as to orthogonally cross with each other as shown in Fig. 7. As a result, a lot of solids having a small quadrangular pyramid shape (a pyramid shape) 12 are arranged regularly all over the worked surface 2.

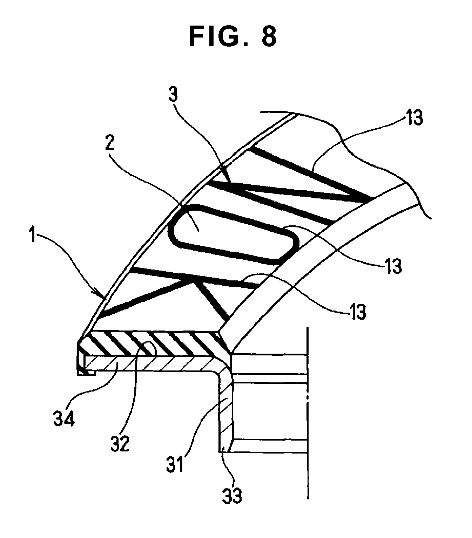

Further, in an embodiment in Fig. 8, the three-dimensional shape 3 is set as projections 13 provided as a logo pattern made by arranging characters such as alphabets or the like (an embossed logo). Each of top portions of the projections 13 and the other portions than the projections 13 is formed as an axially perpendicular flat surface, however, maybe structured such that steps, projections, notches or the like are further provided on the flat surface. The projections 13 may be replaced by notches (an engraved logo), and in any case, a plurality of logos (characters) are arranged circumferentially.

In accordance with the magnetic encoder 1 having the structures mentioned above, since the detected surface 2 of the magnetic encoder 1 is provided with the three-dimensional shape 3 constituted by the steps 7, the projections 8, 9, 10 or 13, the notches 11 or the like, it is possible to prevent the detected surface 2 from being greatly scratched. Even if the detected surface 2 is scratched, the scratch is not conspicuous so much. Accordingly, it is possible to inhibit a commercial value of the encoder product from being extremely lowered.

Further, a foreign matter might come into contact with the detected surface 2 of the magnetic encoder 1 to scratch it, however, since the foreign matter is brought into contact with the high surface portions 4 and 5 of the steps 7 and hardly comes into contact with the low surface portion 6 of the steps 7 in the case that the steps 7 are provided as the three-dimensional shape 3 at the detected surface 2, the low surface portion 6 of the steps 7 is hardly scratched. In the case that the projections 8, 9, 10 or 13 are provided as the three-dimensional shape 3 at the detected surface 2 of the magnetic encoder 1, a foreign matter is brought into contact with the projections 8, 9, 10 or 13, and hardly comes into contact with the other portions than the projections 8, 9, 10 or 13. Accordingly, the other portions than the projections 8, 9, 10 or 13 are hardly scratched. In the case that the notches 11 are provided as the three dimensional shape 3 at the detected surface 2, a foreign matter is brought into contact with the other portions than the notches 11, and hardly comes into contact with inner portions of the notches 11. Accordingly, the inner portions of the notches 11 are hardly scratched. Therefore, it is possible to achieve the structure in which the detected portion is hardly scratched, by utilizing the portions which are hardly scratched, (the low surface portions, the detected surface other than the projections, the detected surface inside the notches, or the like) as an actual detected surface.

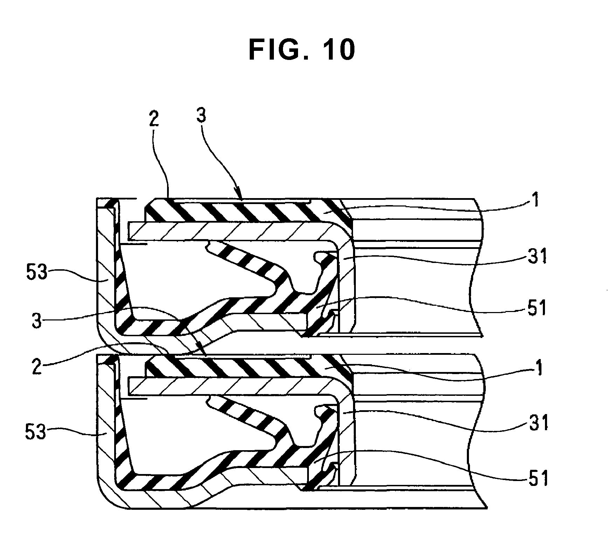

Further, in the case of simultaneously and collectively handling a plurality of combined products, each of which is constituted by a combination of the magnetic encoder 1, the holder 31 to which the magnetic encoder 1 is attached, and the lip seal 51 provided with the lip end 52 being in close contact with the holder 31, there is a case that the magnetic encoder 1 of one combined product (at the lower side in the figure) is attracted to the metal ring 53 of the lip seal 51 of the adjacent combined product (at the upper side in the figure) due to its magnetic force and can be hardly detached, for example, when these combined products are piled in an axial direction as shown in Fig. 10 at a time of product delivery. However, in the case that the three-dimensional shape 3 is provided on the surface of the magnetic encoder 1 like as the present invention, the contact area of the magnetic encoder 1 with respect to the metal ring 53 is reduced and attraction force is weakened. Accordingly, it becomes easy to detach the magnetic encoder 1 from the metal ring 53 against the magnetic force. Therefore, it is possible to easily handle the product provided with the magnetic encoder 1. Further, it is possible to inhibit the magnetic encoder 1 of one combined product from being scratched by the metal ring 53 of the adjacent combined product at a time of piling them in the axial direction.

In this case, the three-dimensional shape 3 is integrally formed by the metal mold or the like at a time of molding (at a time of rubber molding) of the magnetic encoder 1, however, may be provided by post attachment after molding (rubber molding) of the magnetic encoder 1.

Further, in any of the embodiments mentioned above, the three-dimensional shape 3 is provided all over a whole periphery of the detected surface 2. However, the detected surface 2 may be provided with both of a region where the three-dimensional shape 3 is formed and a region where the three-dimensional shape 3 is not formed, and the three-dimensional shape 3 may be formed only in the former region. In this case, there can be considered that both the regions are arranged alternately in a circumferential direction, or arranged in a radial direction (for example, an annular three-dimensional shape formed region is set at an outer peripheral portion of the detected surface 2, and an annular non-formed region is set at an inner peripheral side thereof).

Further, in the embodiment in Fig. 1 mentioned above, since the three-dimensional shape 3 is set as the annular steps 7 in which the annular low surface portion 6 is provided between the high surface portion 4 in an annular shape at the outer peripheral side and the high surface portion 5 also in an annular shape at the inner peripheral side. In other words, this means that annular projections are provided at an outer peripheral portion and an inner peripheral portion of the detected surface 2, or that a annular notch is provided at a the center portion in the radial direction of the detected surface 2. In this case, the projections and the notch are formed such as to have an axially perpendicular flat surface having a predetermined radial width at the top portions thereof and the bottom portion thereof respectively.

Further, in the case of piling a plurality of encoder products in the same orientation in the axial direction as mentioned above, since the detected surface 2 of the magnetic encoder 1 is arranged at one end surface position in the axial direction in one product, the detected surface 2 comes into contact with the product arranged adjacently to tend to be easily scratched, particularly comes into contact with the metal ring of the adjacent product to tend to be easily scratched. The metal ring is constituted, for example, by the holder 31, or the metal ring 53 of the lip seal 51. In the case of piling a plurality of encoder products so as to be aligned in the axial direction as mentioned above, the portion coming into contact with the adjacent product is previously specified in the detected surface 2 of the magnetic encoder 1. Accordingly, it is possible to locally and efficiently make the scratch inconspicuous by intensively providing the three-dimensional shape in accordance with the present invention at such the contact portion. A description will be given below of an example thereof.

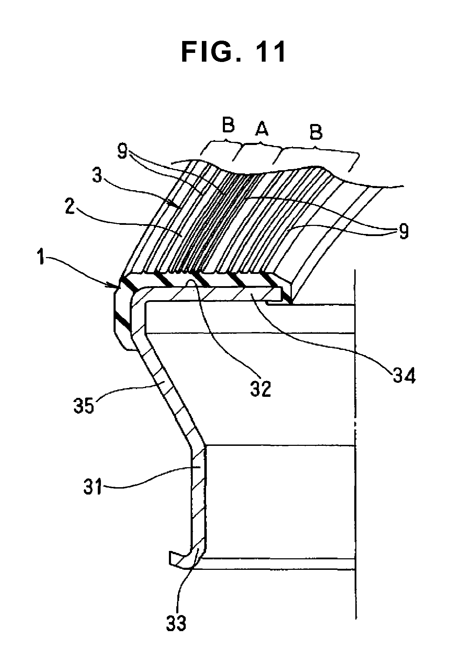

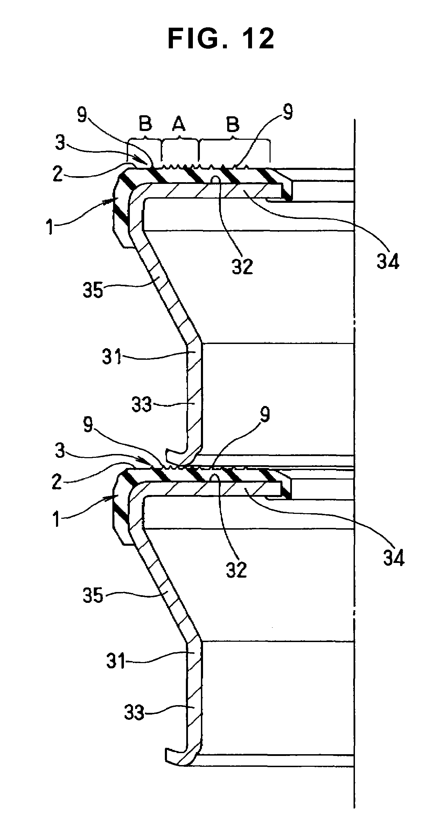

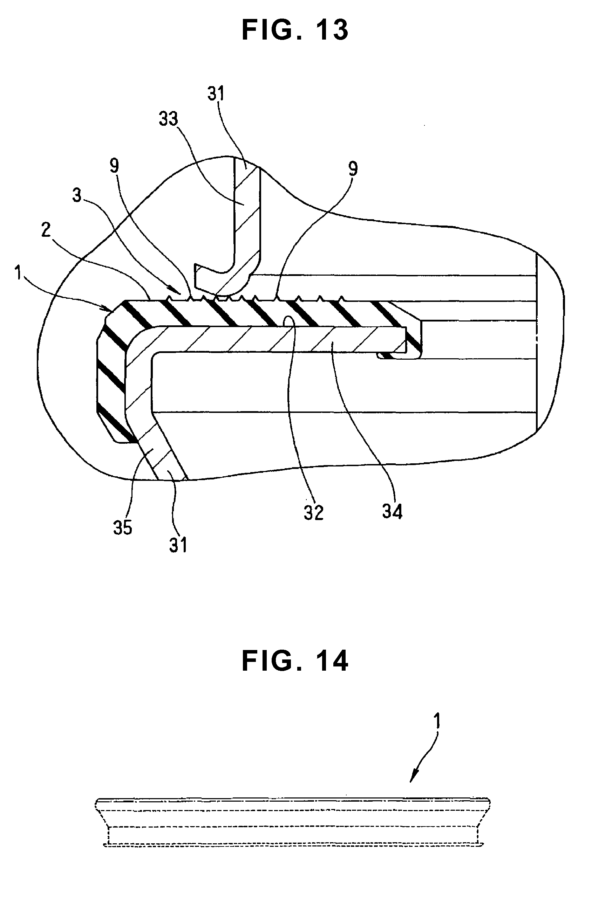

First of all, in an example in Fig. 11, the holder 31 is of a type integrally having the cylinder portion 33, the taper portion 35 and the flange portion 34 as shown in Fig. 9 (in this type, the shaft is pressure-inserted to the inner periphery of the cylinder portion 33), and the encoder product is constructed by this type of holder 31 and the magnetic encoder 1 attached thereto. If a plurality of these products are piled in the same orientation in the axial direction, the annular portion at a center or approximately center portion in the radial direction of the annular detected surface 2 comes into contact with the holder 31 of the adjacent product, thereby tending to be greatly scratched. Accordingly, in order to suppress such the great scratch and to make the scratch inconspicuous, the three-dimensional shape 3 provided at the portion (the contact portion) A coming into contact with the holder 31 of the adjacent product in the detected surface 2 is provided more thickly per unit area than the three-dimensional shape 3 provided at the other portions (the non-contact portions) B. In the example in Fig. 11, since the three-dimensional shape 3 is constituted by the concentric projections 9, the intervals in the radial direction between the projections 9 and 9 are set more thickly in the projections 9 provided at the contact portion A than in the projections 9 provided at the non-contact portion B, whereby the density per unit area is set larger (the heights and the sectional shapes of the projections 9 themselves are set identical). Therefore, in accordance with the structure mentioned above, as shown in Figs. 12 and 13, since the detected surface 2 of one product comes into contact with the holder 31 of the adjacent product at the three-dimensional shape 3 (an end portion of the projection 9) of the thickly formed contact portion A, at a time of piling a plurality of products in the same orientation in the axial direction, the portion to be scratched is limited only to the three-dimensional shape 3 (the end portion of the projection 9) even if the scratch is made. Therefore, it is possible to inhibit the detected surface 2 from being greatly scratched, and it is possible to make the scratch inconspicuous even if the detected surface 2 is scratched. Further, since the holder 31 does not come into contact with the flat surface portions (the other portions than the projections 9) of the detected surface 2, the flat surface portion is hardly scratched.

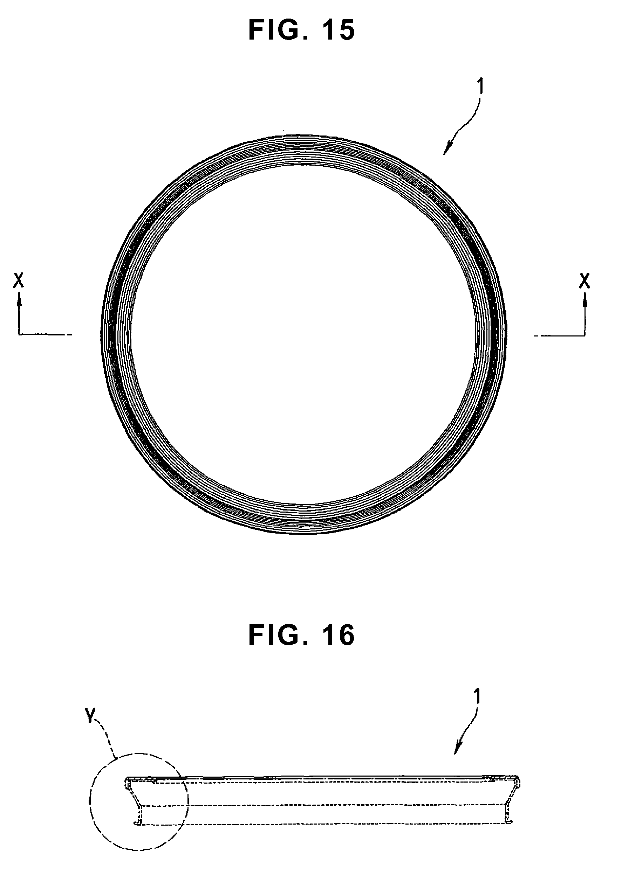

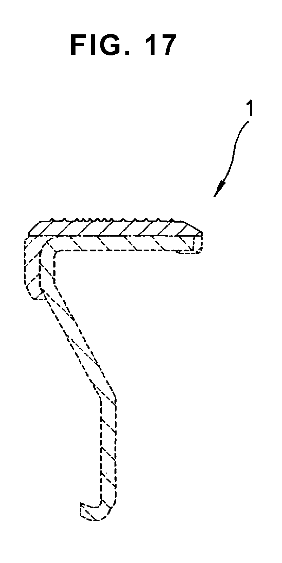

In this case, a designed configuration of the magnetic encoder 1 shown in Fig. 11 is shown in Figs. 14 to 17. Fig. 14 is a front view of the magnetic encoder 1, Fig. 15 is a plan view, Fig. 16 is a sectional view (a sectional view along a line X-X in Fig. 15), and Fig. 17 is an enlarged end view of a substantial part (an enlarged end view of a portion Y in Fig. 16), respectively, and all of these figures are drawn as a partial design in which only the rubber portion is shown by solid lines.

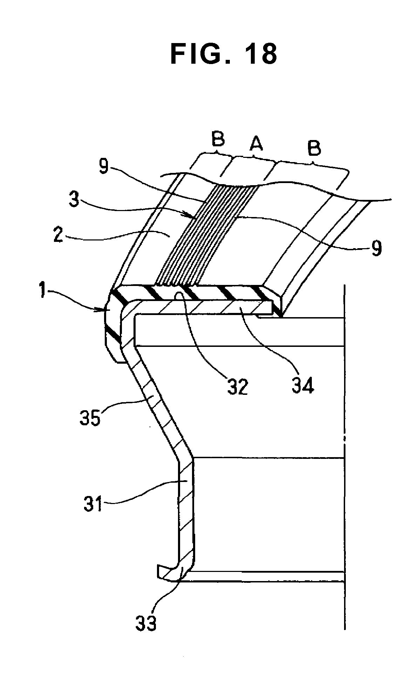

Further, only for the purpose of inhibiting the contact portion A of the detected surface 2, which can be previously specified its position, from being greatly scratched and making the scratch inconspicuous, the concentric projections 9 may be provided as the three-dimensional shape 3 only at the contact portion A and the portions near the contact portion A as shown in Fig. 18. In this case, the non-contact portions B at the inner and outer peripheries thereof are formed as the axially perpendicular flat surface.

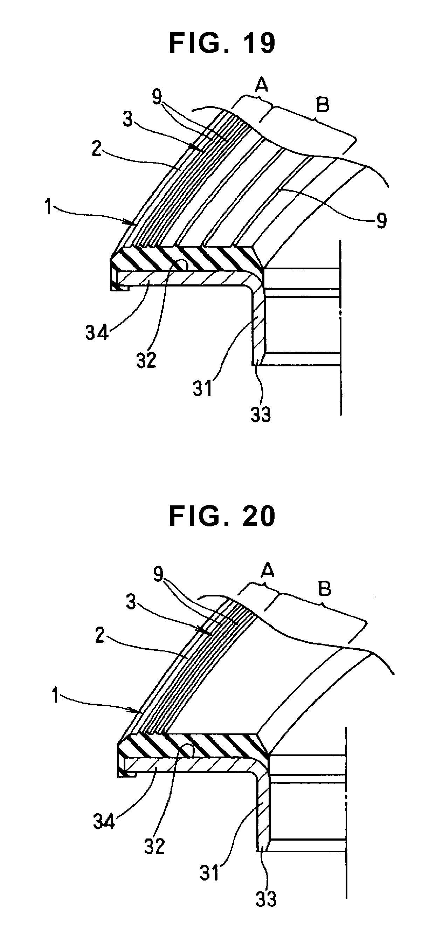

Further, in the case that the encoder product is constituted by a combination of the magnetic encoder 1 as shown in Fig. 10, the holder 31 attached thereto and the lip seal 51 with the metal ring 53, if a plurality of the products mentioned above are piled in the same orientation in the axial direction, the annular portion close to the outer periphery in the annular detected surface 2 comes into contact with the metal ring 53 of the lip seal 51 of the adjacent product, thereby tending to be greatly scratched (since an annular step is provided in the flange portion of the metal ring 53 and the portion at the outer peripheral side thereof protrudes in the axial direction (to the lower side in the figure) than the portion at the inner peripheral side, the annular portion close to the outer periphery in the detected surface 2 readily comes into contact with the metal ring 53). Accordingly, in order to inhibit the great scratch from being formed and make the scratch inconspicuous, the three-dimensional shape 3 provided at the portion (the contact portion) A coming into contact with the metal ring 53 of the lip seal 51 of the adjacent product in the detected surface 2 is provided more thickly per unit area than the three-dimensional shape 3 provided at the other portion (the non-contact portion) B, as shown in Fig. 19. In the example in Fig. 19, since the three-dimensional shape 3 is constituted by the concentric projections 9, the radial intervals between the projections 9 and 9 are more thickly set in the projections 9 provided at the contact portion A than in the projections 9 provided at the non-contact portion B, whereby the density per unit area is set large (the heights and the sectional shapes of the projections 9 themselves are set identical). Therefore, in accordance with the structure mentioned above, since the detected surface 2 of one product comes into contact with the metal ring 53 of the lip seal 51 of the adjacent product at the three-dimensional shape 3 of the thickly formed contact portion A, at a time of piling a plurality of products in the same orientation in the axial direction, it is possible to limit the portion to be scratched only to the three-dimensional shape 3 (the end portion of the projection 9) even if the scratch is formed. Therefore, it is possible to inhibit the detected surface 2 from being greatly scratched, and even if the detected surface 2 is scratched, it is possible to make the scratch inconspicuous. Further, since the metal ring 53 of the lip seal 51 does not come into contact with the flat surface portion (the other portion than the projections 9) of the detected surface 2, the flat surface portion is hardly scratched.

In this case, only for the purpose of inhibiting the contact portion A of the detected surface 2, which can be previously specified its position, from being greatly scratched and making the scratch inconspicuous, the concentric projections 9 may be provided as the three-dimensional shape 3 only at the contact portion A and the portion near the contact portion A as shown in Fig. 20. In this case, the non-contact portion B at the inner periphery is formed as the axially perpendicular flat surface.

Further, in the industry of these products, there is a case that the combined product of the magnetic encoder 1 and the magnetic sensor 21 is collectively called as a magnetic encoder in a broad term, and in this case, there is case that the magnetic encoder 1 in accordance with the present invention is called as a pulsar ring of the magnetic encoder for avoiding a confusion between terms of a narrow definition and a broad definition.

Further, the present invention is not limited to the disc-shaped magnetic encoder, but can be applied to a cylindrical magnetic encoder. Since the cylindrical magnetic encoder has the detected surface on its cylindrical outer peripheral surface or its cylindrical inner peripheral surface, the three-dimensional shape in accordance with the present invention is provided on the cylindrical outer peripheral surface or the cylindrical inner peripheral surface.

## Claims

1. A magnetic encoder (1) which is formed in an annular shape by a magnetic rubber material, is magnetized to be multipolar in a circumferential direction and has a detected surface (2) read by a magnetic sensor, wherein said detected surface (2) is provided with a three-dimensional shape (3) for reducing an area which tends to be scratched on said detected surface (2) and making the scratch inconspicuous if said detected surface (2) is scratched.

2. A magnetic encoder as claimed in claim 1, wherein the three-dimensional shape (3) is constituted by annular steps (7) provided with a low surface portion (6) between high surface portions (4, 5) at an outer peripheral side and an inner peripheral side.

3. A magnetic encoder as claimed in claim 1, wherein the three-dimensional shape (3) is constituted by radially provided projections (8) or notches.

4. A magnetic encoder as claimed in claim 1, wherein the three-dimensional shape (3) is constituted by concentrically provided projections (9) or notches.

5. A magnetic encoder as claimed in claim 1, wherein the three-dimensional shape (3) is constituted by projections (10) or notches provided in a grid shape.

6. A magnetic encoder as claimed in claim 1, wherein the three-dimensional shape (3) is constituted by projections (13) or notches provided as a logo pattern.

7. A magnetic encoder as claimed in claim 1, wherein said magnetic encoder (1) is attached to a holder (31) for retaining said magnetic encoder (1), one product is formed by said magnetic encoder (1) and said holder (31),
wherein the magnetic encoder (1) of one product has such a structure that a part of the detected surface (2) comes into contact with the holder (31) of the adjacent product at a time of piling a plurality of the products in an axial direction,
wherein the three-dimensional shape (3) as claimed in claim 1 is provided at a portion (A) coming into contact with the holder (31) of said adjacent product and other portions (B) in the detected surface (2), and
wherein the three-dimensional shape (3) provided at the portion (A) coming into contact with the holder (31) of said adjacent product is provided more thickly per unit area than the three-dimensional shape (3) provided at said other positions (B).

8. A magnetic encoder as claimed in claim 1, wherein said magnetic encoder (1) is attached to a holder (31) for retaining said magnetic encoder (1), one product is formed by said magnetic encoder (1) and said holder (31),
wherein the magnetic encoder (1) of one product has such a structure that a part of the detected surface (2) comes into contact with the holder (31) of the adjacent product at a time of piling a plurality of the products in an axial direction, and
wherein the three-dimensional shape (3) as claimed in claim 1 is provided only at a portion (A) coming into contact with the holder (31) of said adj acent product and near the portion in the detected surface (2) .

9. A magnetic encoder as claimed in claim 1, wherein said magnetic encoder (1) is attached to a holder (31) for retaining said magnetic encoder (1), and is combined with a lip seal (51) being slidably in close contact with said holder (31), and one product is formed by said magnetic encoder (1), said holder (31) and the lip seal (51),
wherein the magnetic encoder (1) of one product has such a structure that a part of the detected surface (2) comes into contact with the lip seal (51) of the adjacent product at a time of piling a plurality of the products in an axial direction,
wherein the three-dimensional shape (3) as claimed in claim 1 is provided at a portion (A) coming into contact with the lip seal (51) of said adjacent product and other portions (B) in the detected surface (2), and
wherein the three-dimensional shape (3) provided at the portion (A) coming into contact with the lip seal (51) of said adjacent product is provided more thickly per unit area than the three-dimensional shape (3) provided at said other portions (B).

10. A magnetic encoder as claimed in claim 1, wherein said magnetic encoder (1) is attached to a holder (31) for retaining said magnetic encoder (1), and is combined with a lip seal (51) being slidably in close contact with said holder (31), and one product is formed by said magnetic encoder (1), said holder (31) and the lip seal (51),
wherein the magnetic encoder (1) of one product has such a structure that a part of the detected surface (2) comes into contact with the lip seal (51) of the adjacent product at a time of piling a plurality of the products in an axial direction, and
wherein the three-dimensional shape as (3) claimed in claim 1 is provided only at a portion (A) coming into contact with the lip seal (51) of said adjacent product and near the portion in the detected surface (2).

11. A magnetic encoder as claimed in claim 7 or 9,
wherein the three-dimensional shape (3) provided on the detected surface (2) is constituted by concentric circle shaped projections (9), and
wherein radial intervals between the projections (9) are more thickly set for the projections (9) provided at a portion (A) coming into contact with the holder (31) or the lip seal (51) of the adjacent product than for the projections (9) provided at the other portions (B) .
